# EUROPEAN PATENT SPECIFICATION

(11) **EP 4 030 365 B1**
(45) Date of publication and mention of the grant of the patent: **09.12.2026**
(21) Application number: 20874590.1
(22) Date of filing: 27.07.2020
(51) Int. Cl.: B61L 27/60, G06Q 50/40, G06Q 10/0637, G06F 30/20, G06F 30/18, G06F 30/15, G06F 30/13

(54) **MULTI-MODE MULTI-SERVICE RAIL TRANSIT ANALOG SIMULATION METHOD AND SYSTEM**
VERFAHREN UND SYSTEM ZUR SCHIENENVERKEHRSANALOGSIMULATION MIT MEHREREN MODI UND MEHREREN DIENSTEN
PROCÉDÉ ET SYSTÈME DE SIMULATION ANALOGIQUE DE TRANSPORT FERROVIAIRE MULTI-SERVICE MULTI-MODE

(30) Priority: 10.10.2019 CN 201910960470
(43) Date of publication of application: 20.07.2022
(73) Proprietor: CRSC Research & Design Institute Group Co., Ltd., Beijing 100070 (CN)
(72) Inventor: WEI, Wei, Beijing 100070 (CN); WANG, Zhoufan, Beijing 100070 (CN); LIU, Ling, Beijing 100070 (CN); ZHANG, Bo, Beijing 100070 (CN); SHI, Jing, Beijing 100070 (CN)
(74) Representative: Huang, Liwei
(86) International application number: PCT/CN2020/104831
(87) International publication number: WO 2021/068602

(56) References cited:
- EP-A2- 2 821 314
- CN-A- 102 982 407
- CN-A- 103 927 591
- CN-A- 108 510 733
- CN-A- 110 136 457
- CN-A- 110 766 298
- JOCHEN WITTMANN ET AL: "Refinement of the virtual intermodal transportation system (VITS) and adoption for metropolitan area traffic simulation", 20070716; 1077952576 - 1077952576, 16 July 2007 (2007-07-16), pages 1 - 5, XP058325680, ISBN: 978-1-56555-316-3
- LOPEZ PABLO ALVAREZ ET AL: "Microscopic Traffic Simulation using SUMO", 2018 21ST INTERNATIONAL CONFERENCE ON INTELLIGENT TRANSPORTATION SYSTEMS (ITSC), IEEE, 4 November 2018 (2018-11-04), pages 2575 - 2582, XP033470439, ISBN: 978-1-7281-0321-1, [retrieved on 20181207], DOI: 10.1109/ITSC.2018.8569938

## Description

### TECHNICAL FIELD

The present invention belongs to the technical field of rail transit, and particularly relates to an analog simulation method and system for multi-mode multi-service rail transit.

### BACKGROUND ART

Rail transit is an important transport mode in China, forms a national comprehensive traffic system together with highways, shipping, water transport, etc., and is "backbone" and "blood vessel" of a national transport network. With the rapid development of Chinese economy and the acceleration of urban group progress, the rail transit in China is greatly developed. Presently, a "four-longitudinal and four-transverse" rail network has been formed in high-speed railways in China, and an "eight-longitudinal and eight-transverse" high-speed rail trunk network will be built in the future; the urban rail traffic line networks of more than 5000 km have been built in more than 30 cities in China; and inter-city railways and urban railways are also rapidly developing, and rail transit construction tends to multi-mode and networked development.

As the rail transit is gradually constructed into a network, each system rail transit forms a rail transit composite network in a region. Regional rail transit is not strictly defined and is generally considered to include three levels: urban rail transit mainly bearing the travel demand of an urban central area; urban (suburb) rail transit mainly bearing passenger transport demands of suburbs and central urban areas; and intercity and trunk railways mainly bearing passenger transport demands between cities. Presently, "three-network fusion" becomes an important study direction for collaborative development of regional rail transit.

With the large scale of the rail transit composite network, it is difficult to achieve the main function and performance evaluation of the multi-mode rail transit composite network indoors. Presently, a simulation mode is often used in the study process in the rail transit transport industry to verify the function of a transport system and evaluate various indexes of transport. Generally, the construction of the transport simulation system is a single system, such as a high-speed rail network or a subway network; and system verification evaluation mainly aims at single-domain single-service. However, various rail transit systems such as high-speed railways, intercity railways and urban rail transit have mutual influence sand a certain restriction relation, and accordingly, under the large background that multi-mode rail transit is continuously fused, the effect of the simulation evaluation system for single-mode rail transit is increasingly restricted.

The existing simulation system for rail transit transport usually only supports a single system, and does not fully consider mutual influences and restriction relations among passenger flow, traffic flow, facilities and other resources among rail transit systems of different modes, and thus, it is difficult for the existing simulation system for rail transit transport to adapt to performance simulation evaluation of rail transit transport under the multi-mode rail transit networking operation situations;
study, analysis and evaluation of the existing simulation system usually only support the single domain or service, such as signal control, communication, transport dispatch, etc., and does not fully consider correlation among different domains or services, and thus, it is difficult for the existing simulation system to carry out simulation evaluation on regional rail transit transport performance under multi-service comprehensive influences; and
under the large background that multi-mode rail transit is continuously fused, there are lack of the comprehensive simulation evaluation method and system for a collaborative transport performance index of regional rail transit, which simultaneously consider various rail transit system characteristics and mutual relations thereof.

Some prior arts can be seen in "Refinement of the virtual intermodal transportation system (VITS) and adoption for metropolitan area traffic simulation", JOCHEN WITTMANN ET AL, 20070716; 1077952576 -1077952576, 16 July 2007, pages 1-5.

Therefore, it is necessary to research and develop a simulation evaluation system for multi-mode rail transit, which can support various rail transit systems and various domains at the same time under complex network conditions and support comprehensive performance index evaluation of cross-mode collaborative transport.

### SUMMARY

The invention is set out in the appended set of claims.

### Beneficial effects

the present invention provides the analog simulation method and system for multi-mode multi-service rail transit. The system and method of the present invention may reduce passenger travel and operation unit cost, improve overall satisfaction degree of passenger travel, quickly promote urbanization construction, and gradually converts a rail transit operation mode from single-mode relatively independent operation to multi-mode comprehensive operation.
1, The present invention provides a multi-domain and multi-service collaborative transport simulation system fusing multiple rail transit systems, fully considers mutual influences and restriction relations between different modes and different domains, and improves accuracy of simulation evaluation of transport performance of the multi-mode rail transit system.
2, The present invention designs a multi-mode rail transit collaborative transport simulation system having a service scheme and a domain capable of being flexibly configured, which may flexibly configure a scale and a space range of a simulation object, and may flexibly configure a simulation scene according to actual simulation requirements. Specifically, a network scope (mode) and the service decision scheme (collaborative transport/safety guarantee/information service) of simulation and a simulation domain (vehicles/machines/workers/electricity/cars) may be flexibly configured. Simulation and analysis evaluation requirements of the multi-mode rail transit in different regions may be met under the condition of no modification or some minor modification.
3, On the basis of the collaborative transport simulation system for multi-mode rail transit, a performance index simulation evaluation method for collaborative transport of regional rail transit is provided in consideration of various rail transit system characteristics and mutual relations of the rail transit system characteristics, which overcomes one-sidedness existing in a single-mode and single-domain performance index simulation evaluation method, and more effectively supports decision generation and performance improvement of collaborative transport of the regional multi-mode rail transit.

### BRIEF DESCRIPTION OF THE DRAWINGS

In order to more clearly describe the technical solution in the embodiments of the present invention or in the prior art, a brief introduction to the drawings required for the description of the embodiments or the prior art will be provided below. Obviously, the drawings in the following description are merely some embodiments of the present invention. Those of ordinary skill in the art would also be able to derive other drawings from these drawings without making inventive efforts.
FIG. 1 shows an analog simulation system for multi-mode multi-service rail transit of an embodiment of the present invention; and
FIG. 2 shows an analog simulation method for multi-mode multi-service rail transit of an embodiment of the present invention.

### DETAILED DESCRIPTION

In order to make the objectives, technical solutions and advantages of embodiments of the present invention more clear, the technical solutions in the embodiments of the present invention will be clearly and completely described below in conjunction with the drawings in the embodiments of the present invention, and obviously, the described embodiments are some, rather than all of the embodiments of the present invention.

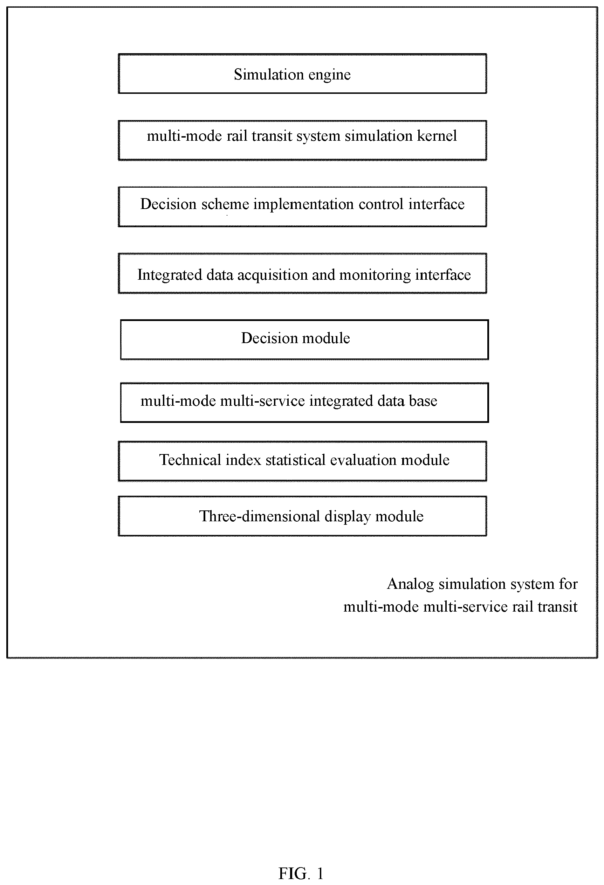

As shown in FIG. 1, an analog simulation system for multi-mode multi-service rail transit mainly includes a simulation engine, a multi-mode rail transit system simulation kernel, a decision scheme implementation control interface, an data acquisition and monitoring interface, a decision module, a multi-mode multi-service data base, a technical index statistical evaluation module and a three-dimensional display module.

The simulation engine is an underlying support of a whole operation environment of the simulation system, and includes a simulation system operation control module, an interface interaction module and basic data, and is mainly constructed by means of common simulation software environments of an existing transport system, for example, Vissim, Anylogic, Railsys, etc. The simulation system operation control module is mainly used for scheduling underlying, managing communications, controlling rhythms and introducing scenes to formulate an overall operation rule of the simulation system; the interface interaction module is mainly used for performing parameter adjustment, event input and system editing for simulation personnel to operate; and the basic data includes composite network three-dimensional model data, composite network topology data, facility and apparatus attribute data, evaluation and analysis scene data and macroscopic real-time passenger flow demand data, and are used for constructing underlying data of the simulation system.

The multi-mode rail transit system simulation kernel is used for implementing a decision scheme, and specifically, is used for influencing traffic flow states and behaviors, passenger flow state behaviors and states and function behaviors of facilities in a regional rail transit system, thereby completing implementation of the decision scheme; and the multi-mode rail transit system simulation kernel is mainly used for simulating an operation situation of the regional rail transit system and includes a transport and passenger flow operation evolution simulation module and a facility and apparatus state evolution simulation module, where the transport and passenger flow operation evolution simulation module and the facility and apparatus state evolution simulation module influence each other and restrict each other in a simulation process. The transport and passenger flow operation evolution simulation module mainly includes network passenger flow macroscopic situation simulation, hub internal passenger flow simulation, individual microscopic travel chain simulation, train tracking operation simulation, train operation schedule simulation, and train stop and landing simulation. The facility and apparatus state evolution simulation module mainly includes configurable multi-domain (vehicles, machines, workers, electricity and cars) system global function behavior simulation and configurable multi-domain (vehicles, machines, workers, electricity and cars) facility and apparatus state evolution (failure and recovery) simulation.

The decision scheme implementation control interface is used for receiving the decision scheme generated by the decision module, and converting the decision scheme into a response control command to be output to the multi-mode rail transit system simulation kernel. Specifically, the decision scheme implementation control interface needs to design corresponding control interfaces for different service decision modules, which include a line and facility and apparatus control interface, a train operation moment control interface, a train path control interface, a passenger flow scale and path control interface, a station (hub) streamline control interface and a microscopic travel chain control interface.

The data acquisition and monitoring interface is used for acquiring operation data and collecting the acquired operation data, and specifically, may monitor operation states of trains, states of facilities, a passenger travel chain, station (hub) passenger flow, etc., and may perform all-around detection and data acquisition on an operation state of the regional rail transit system.

The decision module is used for generating a decision scheme; and specifically, includes a collaborative transport decision module, an online safety guarantee decision module and an intelligent information service module. The decision module forms transport, safety guarantee and information service decision information by means of interface perception analysis, and adjusts the operation state relevant to the regional rail transit system. Adjustment information mainly includes a train operation schedule, train operation state changes, station and hub transport organization measures, facility and apparatus state changes, passenger service facility and apparatus state changes and passenger path selection behavior changes.

A multi-mode multi-service data base is used for supporting generation of the decision scheme according to the collected data, and specifically, forms a multi-mode regional rail transit data basis by collecting multi-mode multi-service real-time monitoring data. The multi-mode multi-service data base further includes a data sharing module, an information interaction module, a cross-mode collaboration module and a cross-service collaboration module. A data sharing and information interaction mechanism is a basis for multi-mode collaborative transport decision and simulation, and appoints basic rules for data sharing and information interaction between different systems and different services. A cross-mode collaboration mechanism and a cross-service collaboration mechanism define mutual influences and restriction relations on passenger flow, train flow, resources and facilities between multi-systems and multi-services from a top layer.

The technical index statistical evaluation module is used for evaluating an operation index of the regional rail transit system according to state change information and the collected data of the regional rail transit system, and specifically, is used for performing performance index statistics and evaluation of collaborative transport of regional rail transit on the basis of multi-mode multi-service real-time monitoring data collection, and integrally evaluating the operation situation of the regional rail transit system composed of multiple rail transit systems and multiple service domains, thereby effectively supporting decision generation and performance improvement of collaborative transport of the regional multi-mode rail transit. Specifically, a performance index of collaborative transport of the regional rail transit includes emergency response and operation and maintenance efficiency, a operation safety accident rate caused by technical reasons, availability of the regional rail transit system, total transport capacity of a regional road network, cross-modality travel time of passengers and a punctuality rate of the regional rail transit.

The three-dimensional display module is mainly used for using a real-time state and a behavior of each simulation object in the multi-mode rail transit system simulation kernel as a blueprint to display an operation state of the whole regional rail transit system. The three-dimensional display module includes rail transit network macroscopic three-dimensional display, train operation process three-dimensional display, station (hub) internal passenger flow/passenger behavior three-dimensional display and facility and apparatus state and behavior three-dimensional display.

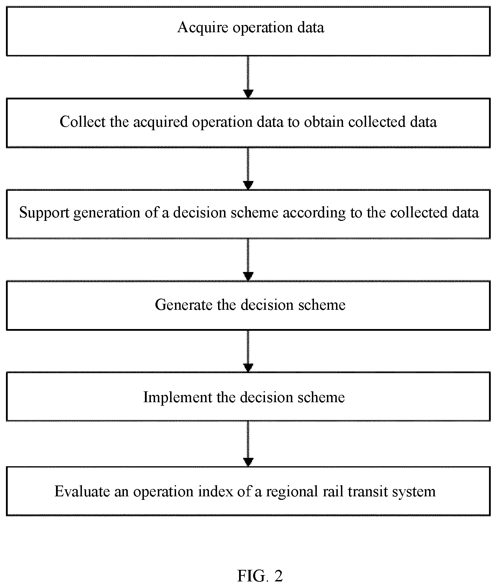

As shown in FIG. 2, an analog simulation method for multi-mode multi-service rail transit mainly includes: acquire operation data, collect the acquired operation data to obtain collected data, support generation of a decision scheme according to the collected data, generate the decision scheme, implement the decision scheme, and evaluating an operation indexes of a regional rail transit system.

The acquiring operation data includes: acquire, by an data acquisition and monitoring interface, an operation state in a simulation process of rail transit operation in real time, where the operation state includes macroscopic situation of train flow and passenger flow, and microcosmic state data of train flow and passenger flow and real-time state data of professional facilities and resources like vehicles, machines, workers, electricity and cars.

The collecting the acquired operation data to obtain collected data includes: collect, by the data acquisition and monitoring interface, the macroscopic situation of train flow and passenger flow, microcosmic state data of the train flow and the passenger flow, and the real-time state data of the professional facilities and resources like the vehicles, the machines, the workers, the electricity and the cars to serve as a basis for multi-service decision scheme generation and index statistical evaluation of the multi-mode regional rail transit system.

The supporting generation of a decision scheme includes: provide, by the data acquisition and monitoring interface, the collected data to a multi-mode multi-service data base to support the generation of the decision scheme.

The generating the decision scheme includes: adjust, by a decision module (including a collaborative transport decision module, an online safety guarantee decision module and an intelligent information service module), a collaborative transport, safety guarantee and information service decision scheme in time according to the operation state of the regional rail transit system, so as to guarantee that each systems may operate normally in each domain.

The implementing the decision scheme includes: receive, by a decision scheme implementation control interface, the decision scheme generated by the decision module, and convert, by the decision scheme implementation control interface, the decision scheme into a response control command to be output to a multi-mode rail transit system simulation kernel, so as to influence vehicle flow states and behaviors, passenger flow state behaviors and states and function behaviors of facilities and apparatuses in the regional rail transit system, thereby completing implementation of the decision scheme.

After the decision scheme is implemented, the vehicle flow states and behaviors, the passenger flow state behaviors and the states and the function behaviors of the facilities and the apparatuses in the regional rail transit system are changed, an operation situation of the regional rail transit system is changed, the state change information of the regional rail transit system is acquired; and the state change information of the regional rail transit system is synchronously updated to the data acquisition and monitoring interface.

The evaluating an operation index of a regional rail transit system includes: analyze and evaluate important indexes of emergency response and operation and maintenance efficiency, an accident rate in operation safety when the accidents are caused by technical reasons, availability of the regional rail transit system, total transport capacity of a regional road network, cross-modality travel time of passengers and a punctuality rate of the regional rail transit.

### Index 1: Emergency response and operation and maintenance efficiency

A test object including key technologies, study contents and system apparatuses related to the emergency response and operation and maintenance efficiency is brought into a simulation scene for operation, a transport and emergency response and maintenance simulation test under risk and fault conditions is carried out in the simulation scene to observe simulation detection parameter change conditions related to the emergency response and operation and maintenance efficiency, and each parameter and meaning of each parameter are shown in a table below.

| Parameter symbol | Parameter definition | Source | Statistical cycle |
|---|---|---|---|
| *ta*_*hppn_{r,a}* | Moment when the r-th type of safety incident or intolerable safety risk occurs at the *a-th* time in a study period, which is accurate to seconds | Simulation acquisition | Real-time detection |
| *ta*_*normal_{r,a}* | Moment when a safety risk falls below a certain level, after the *r*-th type of safety accident or intolerable safety risk occurs at the *a-th* time in a study period, which is accurate to seconds | Simulation acquisition | Real-time detection |
| *Aᵣ* | The number of times of the *r*-th type of safety accidents or intolerable safety risks of the regional rail transit system in a study period | Simulation acquisition | Month and year |
| *R* | The number of types of safety accidents or intolerable safety risks occurring in the regional rail transit system | Fixed parameter | - |
| *ξᵣ* | Weight value of the *r*-th type of safety accidents or intolerable safety risks, of which the value is within interval (0, 1] | Fixed parameter | - |

The emergency response and operation and maintenance efficiency may be measured by the number of safety accidents or intolerable safety risks that the regional rail transit system may handle in unit time. According to evaluation values of simulation detection parameters related to the emergency response and operation and maintenance efficiency, the emergency response and operation and maintenance efficiency *E*_*emg* may be calculated as follows: $E _ emg = \frac{{\sum }_{r = 1}^{R} {ξ}_{r} \times E _ {emg}_{r}}{{\sum }_{r = 1}^{R} {ξ}_{r}}$ $E _ {emg}_{r} = \frac{60 {A}_{r}}{{\sum }_{a = 1}^{{A}_{r}} \left(ta_{normal}_{a}-ta_{hppn}_{a}\right)}$

Evaluation values *E*_*emg0* and E_emg1 of the emergency response and operation maintenance efficiency which correspond to the same fault set before and after a key technical measure is implemented are obtained by means of simulation tests, thereby calculating an index increase rate *Incs(E*_*emg)*. $Incs \left(E_emg\right) = \frac{E _ emg 1 - E _ emg 0}{E _ emg 0} \times 100 %$

An actual index increase rate is compared with an expected emergency response and operation and maintenance efficiency improvement level, such that an index completion condition is evaluated, and if a calculated value of the increase rate is greater than or equal to the expected value, it is indicated that the index is reached, and otherwise, the index is not reached.

### Index 2: Operation safety accident rate caused by technical reasons

A test object including key technologies, study contents and system apparatuses related to the operation safety accident rate caused by the technical reasons is brought into the simulation scene for operation, and a collaborative transport and emergency response and maintenance simulation test under risk and fault conditions is carried out in the simulation scene to observe simulation detection parameter change conditions related to the operation safety accident rate caused by the technical reasons, and each parameter and meaning of each parameter are shown in a table below.

| Parameter symbol | Parameter definition | Source | Statistical cycle |
|---|---|---|---|
| *A tech* | The number of safety accidents of the regional rail transit system in the study period, wherein the accidents are caused by technical problem of cross-mode uncoordination in collaborative linkage, in combined transport organization and in comprehensive safety guarantee of the regional rail transit system, of which a unit is times | Simulation acquisition | Month and year |
| *Mile*_*operation* | Total operation mileage of the multi-mode regional rail transit system in the study period, a unit of which is ten thousand vehicle kilometers | Simulation acquisition | Month and year |
| *T*_*study* | Selected study period length in months, years | Fixed parameter | - |

On one hand, the rail transit operation safety accident rate caused by the technical reasons may be rxpressed by the number of safety accidents of the regional rail transit system caused by a technical problem of cross-mode uncoordination in aspects of transport organization and safety guarantee in unit time, and on the other hand, the rail transit operation safety accident rate caused by the technical reasons may be expressed by the number of safety accidents of the regional rail transit system caused by a technical problem of cross-mode uncoordination in aspects of transport organization and safety guarantee in unit operation mileage. According to the evaluation values of the simulation detection parameters related to the operation safety accident rate caused by the technical reasons, the operation safety accident rate *E_techaccident* caused by the technical reasons may be calculated as follows: $F _ techaccident = \frac{A _ tech}{Mile _ operation} or F _ techaccident = \frac{A _ tech}{T _ study} .$

Evaluation values *F*_*techaccident0* and *F_techaccident1* of the accident rate in operation safety when the accidents are caused by the technical reasons, respectively before and after a key technical measure is implemented, and are obtained by means of analog simulation, thereby calculating an index decrease rate *Decs(F_techaccident).* $Decs \left(F_techaccident\right) = \frac{F _ techaccident 0 - F _ techaccident 1}{F _ techaccident 0} \times 100 %$

An actual index decrease rate is compared with an expected index decrease rate requirement, such that the index completion condition is evaluated, and if a decrease rate calculated value obtained by means of analog simulation or theoretical calculation is greater than or equal to an expected value, it is indicated that a study result has technical capacity that the operation safety accident rate caused by the technical reasons is reduced by 50%, and otherwise it is indicated that the index is not reached.

### Index 3: Availability of regional rail transit system

A test object including key technologies, study contents and system apparatuses related to the availability of the regional rail transit system is brought into the simulation scene for operation, and a transport, emergency response and maintenance simulation test under risk and fault conditions is carried out in the simulation scene to observe simulation detection parameter change conditions related to the availability of the rail transit system, and each parameter and meaning of each parameter are shown in a table below.

| Parameter symbol | Parameter definition | Source | Statistical cycle |
|---|---|---|---|
| *t_nstatestartₘ* | Starting moment of the *m-th* normal working period of the regional rail transit system, which is accurate to minutes | Simulation acquisition | Real-time detection |
| *t_nstateendₘ* | End moment of the *m-th* normal working period of the regional rail transit system, which is accurate to minutes | Simulation acquisition | Real-time detection |
| *M* | The number of periods when the regional rail transit system is in a normal working state in the study period, of which a unit is piece | Fixed parameter | Real-time detection |
| *T operation* | Sum of operation time of the regional rail transit system in the study period | Fixed parameter | - |

The availability of the regional rail transit system may be measured by means of an available degree of the regional rail transit system, and a value of the availability of the regional rail transit system is equal to a proportion of duration of the regional rail transit system kept in a normal working state (global failure is avoided and a service level is higher than a specified standard) in a specified operation period in the study period to specified total operation duration. According to evaluation values of simulation detection parameters related to the availability of the regional rail transit system, the availability *R_availability* of the regional rail transit system may be calculated as follows: $R _ availability = \frac{{\sum }_{m = 1}^{M} \left(t_{nstateend}_{m}-t_{nstatestart}_{m}\right)}{T _ operation} \times 100 %$

The evaluation values of the availability of the regional rail transit system after a key technical measure is implemented are obtained, such that the evaluation value *R_availability* of the availability of the regional rail transit system after the key technical measure is implemented is compared with an expected value, and if the evaluation value is greater than or equal to the expected value, it is indicated that a research result has technical capacity that the availability of the regional rail transit system reaches 99.9%, and otherwise, it is indicated that an index is not reached.

### Index 4: Overall transport capacity of regional road network

A test object including key technologies, study contents and system apparatus related to the overall transport capacity of the regional road network is brought into the simulation scene for operation, passenger flow is continuously injected into the simulation scene for simulation operation, thereby carrying out a passenger flow pressure test to observe simulation detection parameters related to the overall transport capacity of the regional road network, and relevant parameters and meaning of the parameters are shown in a table below.

| Parameter symbol | Parameter Definition | Source | Statistical cycle |
|---|---|---|---|
| *Orgₛ* | number of passengers originating from the *s-th* station, which can be reached in unit time under the condition that the *s-th* station is restricted by line capacity in the multi-mode regional rail transit road network, of which a unit is person time/hour and person time/day | Simulation acquisition | Hours and days |
| *Trsₛ* | the number of passenger transfering at the *s-th* station, which may be reached in unit time under the condition that the *s*-th station is restricted by the line capacity in the multi-mode regional rail transit road network, of which a unit is person time/hour and person time/day | Simulation acquisition | Hours and days |
| *βᵢ* | Capacity influence coefficient of a regional rail transit line caused by operation of a cross-line train, plan collaboration, transfer convenience and comprehensive safety guarantee, *βᵢε(0,1)* | Simulation acquisition | Hours and days |
| *α* | Average use coefficient of passenger carrying capacity of a vehicle body of the regional rail transit system | Simulation acquisition | Hours and days |
| *s* | The total number of stations in the multi-mode regional rail transit road network | Fixed parameter | - |
| *Nᵢ* | passing capacity of line *i*, of which a unit is column | Fixed parameter | - |
| *qᵢ* | Maximum passenger capacity of a single train on line *i* | Fixed parameter | - |

The total transport capacity of the regional road network may be measured by calculating sum of dispatched passenger amount (including originating inbound amount and transfer amount) which may be completed of all stations in the regional rail transit system restricted by line capacity within a certain time (hours (h), and days (d)) under certain fixed apparatus, mobile apparatus, transport organization methods, service levels and passenger flow demand structures; and moreover, the total transport capacity of the regional road network may be obtained by analyzing passenger carrying capacity of each system line in a multi-mode composite network for integrated calculation. According to evaluation values of simulation detection parameters related to the overall transport capacity of the regional road network, the overall transport capacity *C*_*network* of the regional road network may be calculated as follows: $C _ network = {\sum }_{s = 1}^{S} \left({Org}_{s}+{Trs}_{s}\right) or C _ network = {\sum }_{i} {β}_{i} \times {αN}_{i} {q}_{i} .$

Under application of an exemplary regional network structure, fixed and mobile device restrictions, and a certain service level and passenger flow demand structure, the total transportat capacity *C*_*network0* and *C*_*network1* of the regional road network before and after a key technical measure is implemented is obtained, thereby calculating an index increase rate *Incs_(C_network)* as follows: $Incs \left(C_network\right) = \frac{C _ network 1 - C _ network 0}{C _ network 0} \times 100 %$

The index increase rate is compared with an expected regional road network total transport capacity improvement level, such that the index completion condition is evaluated, and if a calculated value of the increase rate is greater than or equal to an expected value, it is indicated that an index is reached, and otherwise, the index is not reached.

### Index5: cross-modality travel time of passengers

A test object including key technologies, study contents and system apparatuses related to the cross-modality travel time of the passengers is brought into the simulation scene for operation, a multi-mode collaborative transport process simulation test is carried out in the simulation scene to observe simulation detection parameter change conditions related to the cross-modality travel time of the passengers, and each parameter and meaning of each parameter are shown in a table below.

| Parameter symbol | Parameter definition | Source | Statistical cycle |
|---|---|---|---|
| *tp***_***in*_*c_{od,q}* | Time point when the *q*-th person with a departure place being station *o* and a destination being station *d* enters the an originating station in a cross mode, which is accurate to minutes | Simulation acquisition | Real-time detection |
| *t_out*_*c_{od,q}* | Time point when the *q*-th person with the departure place being station *o* and the destination being station *d* arrives at the destination station in a cross mode, which is accurate to minutes | Simulation acquisition | Real-time detection |
| *V-C_{od}* | Cross-mode total travel amount with the departure place being station *o* and the destination being station *d*, of which a unit is person times | Simulation acquisition | Hours and days |
| *s* | The total number of stations in the regional rail transit road network, of which a unit is piece | Fixed parameter | - |

The cross-modality travel time of the passengers is equal to a weighted mean value of the cross-modality travel time between all origin-destination (OD ) pairs (origin-destination combination) in the regional rail transit system in a certain time period. The cross-modality travel time between specific OD pairs is an mean value of all cross-mode travel consumed time between the OD pairs. According to evaluation values of simulation detection parameters related to the cross-modality travel time of the passengers, the cross-modality travel time *T*_*travel_c* of the passengers may be calculated as follows: $T _ travel _ c = \frac{{\sum }_{o = 1}^{S} {\sum }_{d = 1}^{S} ν _ {c}_{od} \times T _ travel _ {c}_{od}}{{\sum }_{o = 1}^{S} {\sum }_{d = 1}^{S} ν _ {c}_{od}}$ $T _ travel _ {c}_{od} = \frac{1}{ν _ {c}_{od}} {\sum }_{q = 1}^{ν _ {c}_{od}} \left(t_out_{c}_{od , q}-tp_in_{c}_{od , q}\right)$

The evaluation values *T_travel_c0* and *T_travel*_*c1* of the cross-modality travel time of the passengers before and after a key technical measure is implemented are obtained, thereby calculating an index decrease rate *Decs(T*_*travel_*c) as follows: $Decs \left(T_travel_c\right) = \frac{T _ travel _ c 0 - T _ travel _ c 1}{T _ travel _ c 0} \times 100 %$

An actual index decrease rate is compared with an expected passenger cross-modality travel time decline level, such that the index completion condition is evaluated, and if a calculated value of the decrease rate is greater than or equal to an expected value, it is indicated that an index is reached, and otherwise, the index is not reached.

### Index 6: Punctuality rate of regional rail transit

A test object including key technologies, study contents and system apparatuses related to the punctuality rate of the regional rail transit is brought into the simulation scene for operation, a multi-mode collaborative transport organization process simulation test is carried out in the simulation scene to observe simulation detection parameter change conditions related to the punctuality rate of the regional rail transit, and each parameter and meaning of each parameter are shown in a table below.

| Parameter symbol | Parameter definition | Source | Statistical cycle |
|---|---|---|---|
| *tt*_*arrvₗₖ* | Actual termination moment of the k-th trains operating on the l-th operation line, which is accurate to seconds | Simulation acquisition | Real-time detection |
| *L* | The number of operation lines of multi-mode regional rail transit road network | Fixed parameter | - |
| *Kₗ* | The number of trains operating on the l-th operation line of the regional rail transit system in a study period, where cross-line trains are counted in the operation line in which the cross-line trains terminate | Fixed parameter | - |
| *tt_arrv*_*sₗₖ* | Planned termination moment of the k-th trains operating on the l-th operation line, which is accurate to seconds | Fixed parameter | - |
| *ε*_*arrvₗ* | Allowable error of the trains terminating punctually on the l-th operation line of the regional rail transit system | Fixed parameter | - |

The punctuality rate of the regional rail transit is generally expressed by a termination punctuality rate, and a value of the punctuality rate of the regional rail transit is a ratio of the number of the trains terminating punctually in the regional rail transit network to the number of trains actually operating in a network in a certain time. According to evaluation values of simulation detection parameters related to the punctuality rate of the regional rail transit, the punctuality rate *R-punctuality*_*arrv* of the regional rail transit may be calculated as follows: $R _ punctuality _ arrv = \frac{{\sum }_{l = 1}^{L} {\sum }_{k = 1}^{{K}_{t}} δ \left(\left|tt_{arrv}_{tk}-tt_arrv_{s}_{lk}\right|,ε_{arrv}_{t}\right)}{{\sum }_{l = 1}^{L} {K}_{l}} \times 100 %$ $δ \left(x, ε\right) = \left\{\begin{matrix}1 & 0 \leq x \leq ε \\ 0 & x > ε\end{matrix}\right.$

The evaluation values of the punctuality rate of the regional rail transit after a key technical measure is implemented are obtained by means of simulation tests, such that the evaluation values of the punctuality rate of the regional rail transit after the key technical measure is implemented are compared with index expected values, and if the evaluation values are greater than or equal to the expected values, it is indicated that an index is reached, and otherwise, it is indicated that the index is not reached.

Although the present invention has been described in detail with reference to the above-mentioned embodiments, those of ordinary skill in the art should understand that they may still make modifications to the technical solutions described in the embodiments or equivalent substitutions to some of the technical features of the technical solutions.

## Claims

1. An analog simulation method for multi-mode multi-service rail transit, comprising:
acquiring operation data;
collecting the acquired operation data to obtain collected data;
supporting generation of a decision scheme corresponding to a technical measure according to the collected data;
generating the decision scheme;
implementing the decision scheme in a regional rail transit system; and
thereafter, evaluating an operation index of the regional rail transit system, according to state change information and collected data of the regional rail transit system, including:
analyzing and evaluating important indexes including an index 2, wherein the index 2 is an accident rate in operation safety when the accidents are caused by technical reasons, including:
S21: calculating the accident rate F *techaccident* in operation safety when the accidents are caused by technical reasons and an *index decrease rate Decs(F_techaccident),* wherein
the accident rate *F_techaccident* in operation safety when the accidents are caused by technical reasons is calculated as follows: $F _ techaccident = \frac{A _ tech}{Mile _ operation} or F _ techaccident = \frac{A _ tech}{T _ study} ,$
wherein, *A*_*tech* is the number of safety accidents of the regional rail transit system in the study period, wherein the accidents are caused by technical problem of cross-mode uncoordination in collaborative linkage, in combined transport organization and in comprehensive safety guarantee of the regional rail transit system; *Mile*_*operation* is total operation mileage of the multi-mode regional rail transit system in the study period; and *T*_*study* is a selected study period; and
the index decrease rate Decs (F_techaccident) is calculated as follows: $Decs \left(F_techaccident\right) = \frac{F _ techaccident 0 - F _ techaccident 1}{F _ techaccident 0} \times 100 %$
wherein *F*_*techacident0* is the *F_techaccident* before the decision scheme is implemented, and *F_techacident1* is the *F*_*techaccident* after the decision scheme is implemented;
S22: comparing the calculated index decrease rate with an expected index decrease rate, if the index decrease rate calculated by means of analog simulation or theoretical calculation is greater than or equal to the expected value, it is indicated that the accident rate in operation safety when the accidents are caused by technical reasons is reduced by 50%, and otherwise it is indicated that the index 2 is not reached.

2. The method according to claim 1,
wherein the important indexes further includes an index 1, wherein index 1 is emergency response and operation-maintenance efficiency;
wherein the analyzing and evaluating emergency response and operation-maintenance efficiency comprises:
S11: calculating the emergency response and operation -maintenance efficiency *E emg* and an index increase rate *Incs(E_emg)*,
wherein the emergency response and operation and maintenance efficiency *E emg* is calculated as follows: $E _ emg = \frac{{\sum }_{r = 1}^{R} {ξ}_{r} \times E _ {emg}_{r}}{{\sum }_{r = 1}^{R} {ξ}_{r}}$ $E _ {emg}_{r} = \frac{60 {A}_{r}}{{\sum }_{a = 1}^{{A}_{r}} \left(ta_{normal}_{a}-ta_{hppn}_{a}\right)}$ wherein that, *ξᵣ* is a weight value of the r-th type of safety accidents or intolerable safety risks; *R* is the number of types of safety accidents or intolerable safety risks occurring in the regional rail transit system; *Aᵣ* is the number of times of the r-th type of safety accidents or intolerable safety risks of the regional rail transit system in a study period; *ta*_*normal_{r, a}* is a moment when a safety risk falls below a certain level, after the r-th type of safety incident or intolerable safety risk occurs at the *a-th* time in the study period; and *ta*_*hppn_{r, a}* is a moment when the *r*-th type of safety incident or intolerable safety risk occurs at the *a-th* time in the study period; and
the index increase rate *Incs(E_emg)* is calculated as follows:
$Incs \left(E_emg\right) = \frac{E _ emg 1 - E _ emg 0}{E _ emg 0} \times 100 %$
wherein, *E*_*emg0* is the *E emg* before the decision scheme is implemented, and *E*_*emg1* is the *E emg* after the decision scheme is implemented;
are obtained by means of simulation tests, and *E*_*emg0* and *E*_*emg1* are evaluation values of the emergency response and operation-maintenance efficiency corresponding to the same fault set, respectively before and after the decision scheme is implemented,
S12: comparing the calculated index increase rate with an expected improvement of emergency response and operation and maintenance efficiency, if the calculated value of the increase rate is greater than or equal to the expected value, it is indicated that the index 1 is reached, and otherwise, the index 1 is not reached;

3. The method according to claim 1, wherein the acquiring operation data comprises: acquiring, by an data acquisition and monitoring interface, an operation state in a simulation process of rail transit operation in real time, **characterized in that**, the operation state comprises data of train flow and passenger flow, and real-time state data of professional facilitiesand resources like vehicles, machines, workers, electricity and cars;
the collecting the acquired operation data to obtain collected data comprises: collecting, by the data acquisition and monitoring interface, the data of the train flow and the passenger flow, and the real-time state data of the professional facilities and resources like the vehicles, the machines, the workers, the electricity and the cars, to serve as a basis for multi-service decision scheme generation and index statistical evaluation of the multi-mode regional rail transit system;
the supporting generation of a decision scheme comprises: providing, by the data acquisition and monitoring interface, the collected data to a multi-mode multi-service data base, to support the generation of the decision scheme;
the generating the decision scheme comprises: adjusting, by a decision module, a decision scheme for collaborative transport, safety guarantee and information service in time according to the operation state of the regional rail transit system;
the implementing the decision scheme comprises: receiving, by a decision scheme implementation control interface, the decision scheme generated by the decision module, and converting, by the decision scheme implementation control interface, the decision scheme into a response control command to be output to a multi-mode rail transit system simulation kernel, so as to influence vehicle flow states and behaviors, passenger flow state and behaviors, and states and function behaviors of the facilities in the regional rail transit system, thereby completing implementation of the decision scheme; and
after the decision scheme is implemented, the vehicle flow states and behaviors, the passenger flow state and behaviors, and the states and the function behaviors of the facilities in the regional rail transit system are changed, an operation situation of the regional rail transit system is changed, the state change information of the regional rail transit system is acquired; and the state change information of the regional rail transit system is synchronously updated to the data acquisition and monitoring interface.

4. The method according to claim 1, wherein the important indexes further comprises an index 3 and/or an index 4, wherein the index 3 is availability of the regional rail transit system, the index 4 is total transport capacity of a regional road network,
wherein the analyzing and evaluating availability of the regional rail transit system comprises: calculating the availability *R_availability* of the regional rail transit system, **characterized in that**, the availability *R_availability* of the regional rail transit system is calculated as follows: $R _ availability = \frac{{\sum }_{m = 1}^{M} \left(t_{nstateend}_{m}-t_{nstatestart}_{m}\right)}{T _ operation} \times 100 %$
wherein, *t nstateendₘ* is an end moment of the *m-th* normal working period of the regional rail transit system; *t nstatestartₘ* is a starting moment of the *m-th* normal working period of the regional rail transit system; *T_operation* is sum of operation time of the regional rail transit system in a study period; and *M* is the number of periods when the regional rail transit system is in a normal working state in the study period;
and the analyzing and evaluating total transport capacity of a regional road network comprises: calculating the total transport capacity *C*_*network* of the regional road network and an index increase rate *Incs(C_network),* wherein
the total transport capacity *C*_*network* of the regional road network is calculated as follows: $C _ network = {\sum }_{s = 1}^{S} \left({Org}_{s}+{Trs}_{s}\right) or C _ network = {\sum }_{i} {β}_{i} \times {αN}_{i} {q}_{i} ,$
wherein *s* is the total number of stations in a multi-mode regional rail transit road network; *Orgₛ* is the number of passengers originating from the s-th station, which can be reached in unit time under the condition that the *s*-th station is restricted by line capacity in the multi-mode regional rail transit road network; *Trsₛ* is the number of passenger transfering at the *s*-th station, which can be reached in unit time, under the condition that the s-th station is restricted by the line capacity in the multi-mode regional rail transit road network; *βᵢ* is a capacity influence coefficient of a regional rail transit line caused by operation of a cross-line train, plan collaboration, transfer convenience and comprehensive safety guarantee; *α* is an average use coefficient of passenger carrying capacity of vehicle body of the regional rail transit system; *Nᵢ* is passing capacity of line *i;* and *qᵢ* is a maximum passenger capacity of a single train on line *i;* and
the index increase rate *Ines(C*_*network)* is calculated as follows: $Incs \left(C_network\right) = \frac{C _ network 1 - C _ network 0}{C _ network 0} \times 100 %$
wherein *C_network0* and *C*_*network 1* are total transport capacity of the regional road network, respectively before and after the decision scheme is implemented.

5. The method according to claim 1, wherein wherein the important indexes further comprises an index 5 and/or an index 6, wherein the index 5 is cross-modality travel time of passengers, the index 6 is a punctuality rate of the regional rail transit,
wherein the analyzing and evaluating cross-modality travel time of passengers comprises: calculating the cross-modality travel time *T*_*travel_c* of the passengers and an index decrease rate *Decs(T*_*travel_c),* whereinthe cross-modality travel time *T*_*travel c* of the passengers is calculated as follows: $T _ travel _ c = \frac{{\sum }_{o = 1}^{S} {\sum }_{d = 1}^{S} ν _ {c}_{od} \times T _ travel _ {c}_{od}}{{\sum }_{o = 1}^{S} {\sum }_{d = 1}^{S} ν _ {c}_{od}}$ $T _ travel _ {c}_{od} = \frac{1}{ν _ {c}_{od}} {\sum }_{q = 1}^{ν _ {c}_{od}} \left(t_out_{c}_{od , q}-tp_in_{c}_{od , q}\right)$
wherein S is the total number of stations in a regional rail transit road network; *v*_*c_{od}* is cross-mode total travel amount with a departure place being station *o* and a destination being station *d*; *t_out*_*c_{od, q}* is a time point when the *q*-th person with the departure place being station o and the destination being station *d* arrives at the destination station in a cross mode; and *tp_in*_*c_{od, q}* is a time point when the *q*-th person with the departure point being station o and the destination being station *d* enters the originating station in a cross mode; and
the index decrease rate *Decs(T*_*travel_c)* is calculated as follows: $Decs \left(T_travel_c\right) = \frac{T _ travel _ c 0 - T _ travel _ c 1}{T _ travel _ c 0} \times 100 %$
wherein *T_travel_c0* and *T_travel*_*c1* are evaluation values of the cross-modality travel time of the passengers, respectively before and after the decision scheme is implemented; and
the analyzing and evaluating a punctuality rate of the regional rail transit comprises: calculating the punctuality rate of the regional rail transit, wherein the punctuality rate *R*_*punctuality*_*arrv* of the regional rail transit is calculated as follows: $R _ punctuality _ arrv = \frac{{\sum }_{l = 1}^{L} {\sum }_{k = 1}^{{K}_{l}} δ \left(\left|tt_{arrv}_{tk}-tt_arrv_{s}_{lk}\right|,ε_{arrv}_{t}\right)}{{\sum }_{l = 1}^{L} {K}_{l}} \times 100 %$ $δ \left(x, ε\right) = \left\{\begin{matrix}1 & 0 \leq x \leq ε \\ 0 & x > ε\end{matrix}\right.$
wherein *L* is the number of operation lines of the multi-mode regional rail transit road network; *Kₗ* is the number of trains operating on the *l*-th operation line of the regional rail transit system in a study period, wherein cross-line trains are counted in the operation line in which the cross-line trains terminate; *tt*_*arrvₗₖ* is an actual arrival moment of the *k*-th trains operating on *l*-th operation line; *tt*_*arrv*_*sₗₖ* is a planned arrival moment of the *k*-th trains operating on the *l*-th operation line; and *ε*_*arrvₗ* is an allowable error of the trains punctually arriving on the *l*-th operation line of the regional rail transit system.

6. An analog simulation system for multi-mode multi-service rail transit, configured to carry out the method of any of claims 1 to 5, wherein the analog simulation system comprises
a technical index statistical evaluation module, wherein the technical index statistical evaluation module is configured to evaluate the operation index of a regional rail transit system according to state change information and collected data of the regional rail transit system,
an data acquisition and monitoring interface, a multi-mode multi-service data base,
a decision module,
a decision scheme implementation control interface and
a multi-mode rail transit system simulation kernel, wherein
the data acquisition and monitoring interface is used for acquiring the operation data and collecting the acquired operation data;
the multi-mode multi-service data base is used for supporting generation of the decision scheme according to the collected data;
the decision module is used for generating the decision scheme;
the multi-mode rail transit system simulation kernel is used for implementing the decision scheme, and specifically, the multi-mode rail transit system simulation kernel is used for influencing traffic flow states and behaviors, passenger flow state and behaviors, and states and function behaviors of facilities in the regional rail transit system, thereby completing implementation of the decision scheme; and
the decision scheme implementation control interface is used for receiving the decision scheme generated by the decision module, and converting the decision scheme into a response control command to be output to the multi-mode rail transit system simulation kernel.

7. The analog simulation system for multi-mode multi-service rail transit according to claim 6, further comprising a simulation engine and a three-dimensional display module, wherein
the simulation engine is an underlying support for a whole operation environment of the simulation system and comprises a simulation system operation control module, an interface interaction module and basic data,
the simulation system operation control module being used for scheduling resources, managing communications, controlling rhythms and introducing scenes;
the interface interaction module is used for operation of a simulation user; the interface interaction module being used for performing parameter adjustment, event input and system editing; and
the basic data being used for constructing underlying data of the simulation system, and the basic data comprise composite network three-dimensional model data, composite network topology data, facility attribute data, evaluation and analysis scene data and macroscopic real-time passenger flow demand data; and
the three-dimensional display module uses a real-time state and behavior of each simulation object in the multi-mode rail transit system simulation kernel as a blueprint to display an operation state of the whole regional rail transit system.

## Patentansprüche

1. Analoges Simulationsverfahren für einen schienengebundenen Verkehr mit mehreren Betriebsmodi und mehreren Diensten, umfassend: Erfassen von Betriebsdaten;
Sammeln der erfassten Betriebsdaten, um gesammelte Daten zu erhalten;
Unterstützen der Erzeugung eines einer technischen Maßnahme zugehörigen Entscheidungsplans anhand der gesammelten Daten;
Erzeugen des Entscheidungsplans;
Umsetzen des Entscheidungsplans in einem regionalen schienengebundenen Verkehrssystem; und
anschließendes Bewerten eines Betriebsindex des regionalen schienengebundenen Verkehrssystems anhand von Zustandsänderungsinformationen und den gesammelten Daten des regionalen schienengebundenen Verkehrssystems, wobei umfasst ist:
Analyse und Bewertung wichtiger Kennwerte einschließlich eines Kennwerts 2, wobei der Kennwert 2 eine Unfallrate der Betriebssicherheit bei durch technische Gründe verursachten Unfällen ist, umfassend:
S21: Berechnen der Unfallrate *F_techaccident* der Betriebssicherheit bei durch technische Gründe verursachten Unfällen sowie einer Kennwertabnahmerate *Decs(F*_*techaccident)*, wobei
die Unfallrate *F_techaccident* der Betriebssicherheit bei durch technische Gründe verursachten Unfällen wie folgt berechnet wird: $F _ techaccident = \frac{A _ tech}{Mile _ operation} or F _ techaccident = \frac{A _ tech}{T _ study} ,$
wobei, *A*_*tech* die Anzahl der Sicherheitsunfälle des regionalen schienengebundenen Verkehrssystems im Untersuchungszeitraum ist, wobei die Unfälle durch technische Probleme der modusübergreifenden Nichtkoordination bei der kooperativen Vernetzung, der kombinierten Verkehrsorganisation und der umfassenden Sicherheitsgewährleistung des regionalen schienengebundenen Verkehrssystems verursacht werden; *Mile*_*operation* die gesamte Betriebsfahrleistung des multimodalen regionalen schienengebundenen Verkehrssystems im Untersuchungszeitraum ist; und *T*_*study* ein gewählter Untersuchungszeitraum ist; und
die Kennwertabnahmerate Decs (F_techaccident) wird wie folgt berechnet: $Decs \left(F_techaccident\right) = \frac{F _ techaccident 0 - F _ techaccident 1}{F _ techaccident 0} \times 100 %$
wobei *F*_*techacident0* der Wert von *F_techaccident* vor der Umsetzung des Entscheidungsplans ist und *F*_*techacident1* der Wert von *F_techaccident* nach der Umsetzung des Entscheidungsplans ist;
S22: Vergleichen der berechneten Kennwertabnahmerate mit einer erwarteten Kennwertabnahmerate; falls die mittels analoger Simulation oder theoretischer Berechnung ermittelte Kennwertabnahmerate größer oder gleich dem Erwartungswert ist, bedeutet dies, dass die Unfallrate der Betriebssicherheit bei durch technische Gründe verursachten Unfällen um 50 % gesenkt wurde, andernfalls bedeutet dies, dass der Kennwert 2 nicht erreicht ist.

2. Verfahren nach Anspruch 1,
wobei die wichtigen Kennwerte ferner einen Kennwert 1 umfassen, wobei der Kennwert 1 die Notfallreaktions- und Betriebs-Wartungseffizienz ist;
wobei das Analysieren und Bewerten der Notfallreaktions- und Betriebs-Wartungseffizienz umfasst:
S11: Berechnen der Notfallreaktions- und Betriebs-Wartungseffizienz *E_emg* sowie einer Kennwertsteigerungsrate *Incs(E_emg)*,
wobei die Notfallreaktions- und Betriebs-Wartungseffizienz *E_emg* wie folgt berechnet wird: $E _ emg = \frac{{\sum }_{r = 1}^{R} {ξ}_{r} \times E _ {emg}_{r}}{{\sum }_{r = 1}^{R} {ξ}_{r}}$ $E _ {emg}_{r} = \frac{60 {A}_{r}}{{\sum }_{a = 1}^{{A}_{r}} \left(ta_{normal}_{a}-ta_{hppn}_{a}\right)}$ wobei, *ξᵣ* ein Gewichtungswert für die r-te Art von Sicherheitsunfällen oder nicht tolerierbaren Sicherheitsrisiken ist; *R* die Anzahl der Arten von Sicherheitsunfällen oder nicht tolerierbaren Sicherheitsrisiken ist, die im regionalen schienengebundenen Verkehrssystem auftreten; *Aᵣ* die Auftretungshäufigkeit der r-ten Art von Sicherheitsunfällen oder nicht tolerierbaren Sicherheitsrisiken des regionalen schienengebundenen Verkehrssystems im Untersuchungszeitraum ist; *ta_normal_{r, a}* ein Zeitpunkt ist, zu dem ein Sicherheitsrisiko unter einen bestimmten Schwellenwert sinkt, nachdem die r-te Art von Sicherheitsereignissen oder nicht tolerierbaren Sicherheitsrisiken im Untersuchungszeitraum zum a-ten Mal aufgetreten ist; und *ta_hppn_{r, a}* ein Zeitpunkt ist, zu dem die r-te Art von Sicherheitsereignissen oder nicht tolerierbaren Sicherheitsrisiken im Untersuchungszeitraum zum a-ten Mal aufgetreten ist; und
die Kennwertsteigerungsrate *Incs(E_emg)* wird wie folgt berechnet: $Incs \left(E_emg\right) = \frac{E _ emg 1 - E _ emg 0}{E _ emg 0} \times 100 %$
wobei, *E_emg0* der Wert von *E_emg* vor der Umsetzung des Entscheidungsplans ist, und *E_emg1* der Wert von *E_emg* nach der Umsetzung des Entscheidungsplans ist;
sie werden mittels Simulationsversuchen ermittelt, wobei *E_emg0* und *E_emg1* Bewertungswerte der Notfallreaktions- und Betriebs-Wartungseffizienz sind, die demselben Störungssatz entsprechen, jeweils vor und nach der Umsetzung des Entscheidungsplans,
S12: Vergleichen der berechneten Kennwertsteigerungsrate mit einer erwarteten Verbesserung der Notfallreaktions- und Betriebs-Wartungseffizienz; falls der berechnete Wert der Steigerungsrate größer oder gleich dem Erwartungswert ist, bedeutet dies, dass der Kennwert 1 erreicht ist, andernfalls ist der Kennwert 1 nicht erreicht.

3. Verfahren nach Anspruch 1, wobei das Erfassen von Betriebsdaten umfasst: Echtzeit-Erfassen eines Betriebszustands bei der Simulation des Bahnbetriebs über eine Datenerfassungs- und Überwachungsschnittstelle, **dadurch gekennzeichnet, dass** der Betriebszustand Daten zum Zugaufkommen und Fahrgastaufkommen sowie Echtzeit-Zustandsdaten von Fachanlagen und Ressourcen wie Fahrzeugen, Maschinen, Personal, Elektrik und Wagen umfasst;
das Sammeln der erfassten Betriebsdaten zum Erhalten gesammelter Daten umfasst: Sammeln der Daten zum Zugaufkommen und Fahrgastaufkommen sowie der Echtzeit-Zustandsdaten der Fachanlagen und Ressourcen wie Fahrzeugen, Maschinen, Personal, Elektrik und Wagen über die Datenerfassungs- und Überwachungsschnittstelle als Grundlage für die Generierung von Mehrdienst-Entscheidungsplänen und die Kennwertstatistikbewertung des multimodalen regionalen Schienenverkehrssystems;
das Unterstützen der Generierung eines Entscheidungsplans umfasst: Bereitstellen der gesammelten Daten an eine multimodale Mehrdienst-Datenbank über die Datenerfassungs- und Überwachungsschnittstelle zur Unterstützung der Generierung des Entscheidungsplans;
das Generieren des Entscheidungsplans umfasst: zeitgerechtes Anpassen eines Entscheidungsplans für den kooperativen Transport, die Sicherheitsgewährleistung und den Informationsdienst durch ein Entscheidungsmodul entsprechend dem Betriebszustand des regionalen Schienenverkehrssystems;
das Umsetzen des Entscheidungsplans umfasst: Empfangen des durch das Entscheidungsmodul generierten Entscheidungsplans über eine Entscheidungsplan-Umsetzungssteuerschnittstelle und Umwandeln des Entscheidungsplans durch die Entscheidungsplan-Umsetzungssteuerschnittstelle in Antwort-Steuerbefehle zur Ausgabe an einen Simulationskern des multimodalen Schienenverkehrssystems, um die Zustände und Verhaltensweisen des Fahrzeugaufkommens, die Zustände und Verhaltensweisen des Fahrgastaufkommens sowie die Zustände und Funktionsverhaltensweisen der Anlagen im regionalen Schienenverkehrssystem zu beeinflussen und dadurch die Umsetzung des Entscheidungsplans abzuschließen; und
nach der Umsetzung des Entscheidungsplans ändern sich die Zustände und Verhaltensweisen des Fahrzeugaufkommens, die Zustände und Verhaltensweisen des Fahrgastaufkommens sowie die Zustände und Funktionsverhaltensweisen der Anlagen im regionalen Schienenverkehrssystem, wodurch sich die Betriebslage des regionalen Schienenverkehrssystems ändert; die Zustandsänderungsinformationen des regionalen Schienenverkehrssystems werden erfasst, und die Zustandsänderungsinformationen des regionalen Schienenverkehrssystems werden synchron auf der Datenerfassungs- und Überwachungsschnittstelle aktualisiert.

4. Verfahren nach Anspruch 1, wobei die wichtigen Kennwerte ferner einen Kennwert 3 und/oder einen Kennwert 4 umfassen, wobei der Kennwert 3 die Verfügbarkeit des regionalen Schienenverkehrssystems ist und der Kennwert 4 die Gesamttransportkapazität eines regionalen Straßennetzes ist,
wobei das Analysieren und Bewerten der Verfügbarkeit des regionalen Schienenverkehrssystems umfasst: Berechnen der Verfügbarkeit *R*_*availability* des regionalen Schienenverkehrssystems, **dadurch gekennzeichnet, dass** die Verfügbarkeit *R*_*availability* des regionalen Schienenverkehrssystems wie folgt berechnet wird: $R _ availability = \frac{{\sum }_{m = 1}^{M} \left(t_{nstateend}_{m}-t_{nstatestart}_{m}\right)}{T _ operation} \times 100 %$
wobei, *t_nstateendₘ* der Endzeitpunkt des m-ten Normalbetriebszeitraums des regionalen Schienenverkehrssystems ist; *t_nstatestartₘ* der Startzeitpunkt des m-ten Normalbetriebszeitraums des regionalen Schienenverkehrssystems ist; *T*_*operation* die Summe der Betriebszeiten des regionalen Schienenverkehrssystems innerhalb eines Untersuchungszeitraums ist; und *M* die Anzahl der Zeiträume ist, in denen sich das regionale Schienenverkehrssystem im Untersuchungszeitraum im Normalbetriebszustand befindet;
und das Analysieren und Bewerten der Gesamttransportkapazität eines regionalen Straßennetzes umfasst: Berechnen der Gesamttransportkapazität *C_network* des regionalen Straßennetzes sowie einer Kennwertsteigerungsrate *Incs(C*_*network)*, wobei
die Gesamttransportkapazität *C_network* des regionalen Straßennetzes wie folgt berechnet wird: $C _ network = {\sum }_{s = 1}^{S} \left({Org}_{s}+{Trs}_{s}\right) or C _ network = {\sum }_{i} {β}_{i} \times {αN}_{i} {q}_{i} ,$
wobei *s* die Gesamtzahl der Stationen in einem multimodalen regionalen Schienenverkehrsnetz ist; *Orgₛ* die Anzahl der von der s-ten Station ausgehenden Fahrgäste ist, die pro Zeiteinheit erreichbar sind, wenn die s-te Station im multimodalen regionalen Schienenverkehrsnetz durch die Streckenkapazität begrenzt ist; *Trsₛ* die Anzahl der an der s-ten Station umsteigenden Fahrgäste ist, die pro Zeiteinheit erreichbar sind, wenn die s-te Station im multimodalen regionalen Schienenverkehrsnetz durch die Streckenkapazität begrenzt ist; *βᵢ* ein Kapazitätsbeeinflussungskoeffizient einer regionalen Schienenverkehrsstrecke ist, der durch den Betrieb von Streckenübergreifenden Zügen, die Planungskoordination, die Umsteigekomfortabilität und die umfassende Sicherheitsgewährleistung verursacht wird; *α*ein durchschnittlicher Auslastungskoeffizient der Fahrgastkapazität des Fahrzeugkastens des regionalen Schienenverkehrssystems ist; *Nᵢ* die Durchlasskapazität der Strecke *i* ist; und *qᵢ* die maximale Fahrgastkapazität eines Einzelfahrzugs auf der Strecke *i* ist; und
die Kennwertsteigerungsrate *Ines(C*_*network)* wird wie folgt berechnet: $Incs \left(C_network\right) = \frac{C _ network 1 - C _ network 0}{C _ network 0} \times 100 %$
wobei *C*_*network0* und *C*_*network 1* die Gesamttransportkapazität des regionalen Straßennetzes jeweils vor und nach der Umsetzung des Entscheidungsplans sind.

5. Verfahren nach Anspruch 1, wobei die wichtigen Kennwerte ferner einen Kennwert 5 und/oder einen Kennwert 6 umfassen, wobei der Kennwert 5 die multimodale Reisezeit der Fahrgäste ist und der Kennwert 6 die Pünktlichkeitsrate des regionalen Schienenverkehrs ist,
wobei das Analysieren und Bewerten der multimodalen Reisezeit der Fahrgäste umfasst: Berechnen der multimodalen Reisezeit *T_travel_c* der Fahrgäste sowie einer Kennwertabnahmerate *Decs(T_travel_c),* wobei die multimodale Reisezeit *T_travel_c* der Fahrgäste wie folgt berechnet wird: $T _ travel _ c = \frac{{\sum }_{o = 1}^{S} {\sum }_{d = 1}^{S} ν _ {c}_{od} \times T _ travel _ {c}_{od}}{{\sum }_{o = 1}^{S} {\sum }_{d = 1}^{S} ν _ {c}_{od}}$ $T _ travel _ {c}_{od} = \frac{1}{ν _ {c}_{od}} {\sum }_{q = 1}^{ν _ {c}_{od}} \left(t_out_{c}_{od , q}-tp_in_{c}_{od , q}\right)$
wobei S die Gesamtzahl der Stationen in einem regionalen Schienenverkehrsnetz ist; *v*_*c_{od}* die multimodale Gesamtreiseanzahl mit Startstation o und Zielstation d ist; *t_out_c_{od}, _{q}* der Zeitpunkt ist, zu dem die q-te Person mit Startstation o und Zielstation d die Zielstation im multimodalen Verkehr erreicht; und *tp*_*in*_*c_{od, q}* der Zeitpunkt ist, zu dem die q-te Person mit Startstation o und Zielstation d die Startstation im multimodalen Verkehr betritt; und
die Kennwertabnahmerate *Decs(T_travel_c)* wird wie folgt berechnet: $Decs \left(T_travel_c\right) = \frac{T _ travel _ c 0 - T _ travel _ c 1}{T _ travel _ c 0} \times 100 %$
wobei *T*_*travel*_*c0* und *T*_*travel*_*c1* Bewertungswerte der multimodalen Reisezeit der Fahrgäste jeweils vor und nach der Umsetzung des Entscheidungsplans sind; und
das Analysieren und Bewerten der Pünktlichkeitsrate des regionalen Schienenverkehrs umfasst: Berechnen der Pünktlichkeitsrate des regionalen Schienenverkehrs, wobei die Pünktlichkeitsrate *R*_*punctuality*_*arrv* des regionalen Schienenverkehrs wie folgt berechnet wird: $R _ punctuality _ arrv = \frac{{\sum }_{l = 1}^{L} {\sum }_{k = 1}^{{K}_{l}} δ \left(\left|tt_{arrv}_{lk}-tt_arrv_{s}_{lk}\right|,ε_{arrv}_{l}\right)}{{\sum }_{l = 1}^{L} {K}_{l}} \times 100 %$ $δ \left(x, ε\right) = \left\{\begin{matrix}1 & 0 \leq x \leq ε \\ 0 & x > ε\end{matrix}\right.$
wobei *L* die Anzahl der Betriebsstrecken des multimodalen regionalen Schienenverkehrsnetzes ist; *Kₗ* die Anzahl der Züge ist, die im Untersuchungszeitraum auf der l-ten Betriebsstrecke des regionalen Schienenverkehrssystems verkehren, wobei streckenübergreifende Züge der Betriebsstrecke zugerechnet werden, an der sie enden; *tt_arrvₗₖ* der tatsächliche Ankunftszeitpunkt des k-ten Zuges auf der l-ten Betriebsstrecke ist; *tt_arrv_sₗₖ* der geplante Ankunftszeitpunkt des k-ten Zuges auf der l-ten Betriebsstrecke ist; und *ε*_*arrvₗ* ein zulässiger Fehler für das pünktliche Eintreffen der Züge auf der l-ten Betriebsstrecke des regionalen Schienenverkehrssystems ist.

6. Analoge Simulationsanlage für den multimodalen Mehrdienst-Schienenverkehr, ausgebildet zur Durchführung des Verfahrens nach einem der Ansprüche 1 bis 5, wobei die analoge Simulationsanlage umfasst
ein Statistik- und Bewertungsmodul für technische Kennwerte, wobei das Statistik- und Bewertungsmodul für technische Kennwerte ausgebildet ist, die Betriebskennwerte eines regionalen Schienenverkehrssystems anhand von Zustandsänderungsinformationen und gesammelten Daten des regionalen Schienenverkehrssystems zu bewerten,
eine Datenerfassungs- und Überwachungsschnittstelle, eine multimodale Mehrdienst-Datenbank,
ein Entscheidungsmodul,
eine Entscheidungsplan-Umsetzungssteuerschnittstelle und
einen Simulationskern des multimodalen Schienenverkehrssystems, wobei
wobei die Datenerfassungs- und Überwachungsschnittstelle zum Erfassen der Betriebsdaten und zum Sammeln der erfassten Betriebsdaten dient;
die multimodale Mehrdienst-Datenbank zum Unterstützen der Generierung des Entscheidungsplans anhand der gesammelten Daten dient;
das Entscheidungsmodul zum Generieren des Entscheidungsplans dient;
der Simulationskern des multimodalen Schienenverkehrssystems zum Umsetzen des Entscheidungsplans dient, wobei der Simulationskern des multimodalen Schienenverkehrssystems insbesondere dazu dient, die Zustände und Verhaltensweisen des Verkehrsaufkommens, die Zustände und Verhaltensweisen des Fahrgastaufkommens sowie die Zustände und Funktionsverhaltensweisen der Anlagen im regionalen Schienenverkehrssystem zu beeinflussen und dadurch die Umsetzung des Entscheidungsplans abzuschließen; und
die Entscheidungsplan-Umsetzungssteuerschnittstelle zum Empfangen des durch das Entscheidungsmodul generierten Entscheidungsplans und zum Umwandeln des Entscheidungsplans in Antwort-Steuerbefehle zur Ausgabe an den Simulationskern des multimodalen Schienenverkehrssystems dient.

7. Analoge Simulationsanlage für den multimodalen Mehrdienst-Schienenverkehr nach Anspruch 6, ferner umfassend eine Simulationsmaschine und ein dreidimensionales Darstellungsmodul, wobei
die Simulationsmaschine bildet die unterlagernde Unterstützung für die gesamte Betriebsumgebung der Simulationsanlage und umfasst ein Betriebssteuermodul der Simulationsanlage, ein Schnittstelleninteraktionsmodul sowie Basisdaten,
wobei das Betriebssteuermodul der Simulationsanlage zur Ressourcenplanung, Kommunikationsverwaltung, Ablaufsteuerung und Szenarioeinleitung dient;
das Schnittstelleninteraktionsmodul zur Bedienung durch einen Simulationsnutzer dient, wobei das Schnittstelleninteraktionsmodul zur Parameteranpassung, Ereigniseingabe und Systembearbeitung dient; und
die Basisdaten zum Aufbau der unterlagernden Daten der Simulationsanlage dienen, wobei die Basisdaten dreidimensionale Modelldaten des Verbundnetzes, Topologiedaten des Verbundnetzes, Anlagenattributdaten, Bewertungs- und Analyseszenariodaten sowie makroskopische Echtzeit-Fahrgastnachfragedaten umfassen; und
das dreidimensionale Darstellungsmodul nutzt die Echtzeit-Zustände und Verhaltensweisen jedes Simulationsobjekts im Simulationskern des multimodalen Schienenverkehrssystems als Grundlage, um den Betriebszustand des gesamten regionalen Schienenverkehrssystems darzustellen.

## Revendications

1. Procédé de simulation analogique pour le transport ferroviaire multimodal à services multiples, comprenant : l'acquisition de données d'exploitation;
le regroupement des données d'exploitation acquises pour obtenir des données regroupées;
le soutien à la génération d'un schéma de décision correspondant à une mesure technique sur la base des données regroupées;
la génération du schéma de décision;
la mise en œuvre du schéma de décision dans un système de transport ferroviaire régional ; et
ensuite, l'évaluation d'un indicateur d'exploitation du système de transport ferroviaire régional, sur la base des informations de changement d'état et des données regroupées du système de transport ferroviaire régional, comprenant:
l'analyse et l'évaluation d'indicateurs importants incluant un indicateur 2, où l'indicateur 2 est le taux d'accident lié à la sécurité d'exploitation lorsque les accidents sont dus à des causes techniques, comprenant:
S21 : calcul du taux d'accident *F*_*techaccident* relatif à la sécurité d'exploitation pour les accidents dus à des causes techniques et d'un taux de diminution d'indicateu *Decs(F*_*techaccident)*, où
le taux d'accident *F_techaccident* relatif à la sécurité d'exploitation pour les accidents dus à des causes techniques est calculé comme suit: $F _ techaccident = \frac{A _ tech}{Mile _ operation} or F _ techaccident = \frac{A _ tech}{T _ study} ,$
où, *A*_*tech* est le nombre d'accidents de sécurité du système de transport ferroviaire régional sur la période d'étude, ces accidents étant provoqués par des problèmes techniques liés au manque de coordination intermodal dans la liaison collaborative, l'organisation du transport combiné et la garantie de sécurité globale du système de transport ferroviaire régional; *Mile*_*operation* est le kilométrage d'exploitation total du système de transport ferroviaire régional multimodal sur la période d'étude; et *T*_*study* est une période d'étude choisie ; et
le taux de diminution d'indicateur Decs (F_techaccident) est calculé comme suit: $Decs \left(F_techaccident\right) = \frac{F _ techaccident 0 - F _ techaccident 1}{F _ techaccident 0} \times 100 %$
où*F_techacident0* correspond à*F*_*techaccident* avant la mise en œuvre du schéma de décision,et *F*_*techacident1* correspond à*F*_*techaccident* après la mise en œuvre du schéma de décision;
S22 : comparaison du taux de diminution d'indicateur calculé avec un taux de diminution d'indicateur attendu ; si le taux de diminution d'indicateur calculé par simulation analogique ou calcul théorique est supérieur ou égal à la valeur attendue, cela signifie que le taux d'accident lié à la sécurité d'exploitation pour les accidents dus à des causes techniques a diminué de 50 %, sinon l'indicateur 2 n'est pas atteint.

2. Procédé selon la revendication 1,
où les indicateurs importants comprennent en outre un indicateur 1, l'indicateur 1 étant l'efficacité d'intervention d'urgence et d'exploitation-maintenance;
où l'analyse et l'évaluation de l'efficacité d'intervention d'urgence et d'exploitation-maintenance comprennent:
S11 : calcul de l'efficacité d'intervention d'urgence et d'exploitation-maintenance *E_emg* et d'un taux d'augmentation d'indicateur *Incs(E_emg)*,
où l'efficacité d'intervention d'urgence et d'exploitation-maintenance *E_emg* est calculée comme suit: $E _ emg = \frac{{\sum }_{r = 1}^{R} {ξ}_{r} \times E _ {emg}_{r}}{{\sum }_{r = 1}^{R} {ξ}_{r}}$ $E _ {emg}_{r} = \frac{60 {A}_{r}}{{\sum }_{a = 1}^{{A}_{r}} \left(ta_{normal}_{a}-ta_{hppn}_{a}\right)}$
où, *ξᵣ* est une valeur de pondération du r-ième type d'accident de sécurité ou de risque de sécurité intolérable; *R* est le nombre de types d'accidents de sécurité ou de risques de sécurité intolérables survenant dans le système de transport ferroviaire régional; *Aᵣ* est le nombre d'occurrences du r-ième type d'accident de sécurité ou de risque de sécurité intolérable du système de transport ferroviaire régional sur une période d'étude; *ta_normal_{r, a}* est le moment où un risque de sécurité descend en dessous d'un niveau donné, après que le r-ième type d'incident de sécurité ou de risque de sécurité intolérable s'est produit pour la a-ième fois au cours de la période d'étude; et *ta_hppn_{r, a}* est le moment où le r-ième type d'incident de sécurité ou de risque de sécurité intolérable se produit pour la a-ième fois au cours de la période d'étude ; et
le taux d'augmentation d'indicateur *Incs(E_emg)* est calculé comme suit: $Incs \left(E_emg\right) = \frac{E _ emg 1 - E _ emg 0}{E _ emg 0} \times 100 %$
où, *E_emg0* correspond à*E*_*emg* avant la mise en œuvre du schéma de décision et *E_emg1* correspond à*E*_*emg* après la mise en œuvre du schéma de décision;
ces valeurs sont obtenues par des essais de simulation, et *E_emg0* et *E_emg1* sont des valeurs d'évaluation de l'efficacité d'intervention d'urgence et d'exploitation-maintenance correspondant au même ensemble de défauts, respectivement avant et après la mise en œuvre du schéma de décision,
S12 : comparaison du taux d'augmentation d'indicateur calculé avec une amélioration attendue de l'efficacité d'intervention d'urgence et d'exploitation-maintenance ; si la valeur calculée du taux d'augmentation est supérieure ou égale à la valeur attendue, cela signifie que l'indicateur 1 est atteint, sinon l'indicateur 1 n'est pas atteint.

3. Procédé selon la revendication 1, où l'acquisition de données d'exploitation comprend : l'acquisition en temps réel d'un état d'exploitation au cours d'une simulation de l'exploitation ferroviaire par une interface d'acquisition et de surveillance de données, **caractérisé en ce que** l'état d'exploitation comprend des données de flux de trains et de flux de passagers, ainsi que des données d'état en temps réel des installations et ressources spécialisées telles que les véhicules, les machines, le personnel, l'alimentation électrique et les wagons;
le regroupement des données d'exploitation acquises pour obtenir des données regroupées comprend : le regroupement, par l'interface d'acquisition et de surveillance de données, des données de flux de trains et de flux de passagers ainsi que des données d'état en temps réel des installations et ressources spécialisées telles que les véhicules, les machines, le personnel, l'alimentation électrique et les wagons, servant de base à la génération de schémas de décision multiservices et à l'évaluation statistique des indicateurs du système de transport ferroviaire régional multimodal;
le soutien à la génération d'un schéma de décision comprend : la fourniture, par l'interface d'acquisition et de surveillance de données, des données regroupées à une base de données multimodale multiservices, afin de soutenir la génération du schéma de décision;
la génération du schéma de décision comprend : l'ajustement en temps opportun, par un module de décision, d'un schéma de décision relatif au transport collaboratif, à la garantie de sécurité et au service d'informations en fonction de l'état d'exploitation du système de transport ferroviaire régional;
la mise en œuvre du schéma de décision comprend : la réception, par une interface de commande de mise en œuvre du schéma de décision, du schéma de décision généré par le module de décision, et la conversion, par l'interface de commande de mise en œuvre du schéma de décision, du schéma de décision en ordres de commande de réponse destinés à être transmis à un noyau de simulation du système de transport ferroviaire multimodal, afin d'influencer les états et comportements du flux de véhicules, les états et comportements du flux de passagers, ainsi que les états et comportements fonctionnels des installations du système de transport ferroviaire régional, pour achever ainsi la mise en œuvre du schéma de décision ; et
après la mise en œuvre du schéma de décision, les états et comportements du flux de véhicules, les états et comportements du flux de passagers, ainsi que les états et comportements fonctionnels des installations du système de transport ferroviaire régional sont modifiés, la situation d'exploitation du système de transport ferroviaire régional évolue, les informations de changement d'état du système de transport ferroviaire régional sont acquises ; et les informations de changement d'état du système de transport ferroviaire régional sont mises à jour de manière synchrone au niveau de l'interface d'acquisition et de surveillance de données.

4. Procédé selon la revendication 1, où les indicateurs importants comprennent en outre un indicateur 3 et/ou un indicateur 4, l'indicateur 3 étant la disponibilité du système de transport ferroviaire régional et l'indicateur 4 étant la capacité de transport totale d'un réseau routier régional,
où l'analyse et l'évaluation de la disponibilité du système de transport ferroviaire régional comprennent: le calcul de la disponibilité*R*_*availability* du système de transport ferroviaire régional, **caractérisé en ce que** la disponibilité*R*_*availability* du système de transport ferroviaire régional est calculée comme suit: $R _ availability = \frac{{\sum }_{m = 1}^{M} \left(t_{nstateend}_{m}-t_{nstatestart}_{m}\right)}{T _ operation} \times 100 %$
où, *t_nstateendₘ* est le moment de fin de la m-ième période de fonctionnement normal du système de transport ferroviaire régional; *t_nstatestartₘ* est le moment de début de la m-ième période de fonctionnement normal du système de transport ferroviaire régional; *T*_*operation* est la somme des temps d'exploitation du système de transport ferroviaire régional sur une période d'étude ; et M est le nombre de périodes pendant lesquelles le système de transport ferroviaire régional se trouve dans un état de fonctionnement normal au cours de la période d'étude;
l'analyse et l'évaluation de la capacité de transport totale d'un réseau routier régional comprennent: le calcul de la capacité de transport totale \(C_{network}\) *C_network* du réseau routier régional et d'un taux d'augmentation d'indicateur *Incs(C*_*network)*, où
la capacité de transport totale *C_network* du réseau routier régional est calculée comme suit: $C _ network = {\sum }_{s = 1}^{S} \left({Org}_{s}+{Trs}_{s}\right) or C _ network = {\sum }_{i} {β}_{i} \times {αN}_{i} {q}_{i} ,$
où*s* est le nombre total de stations d'un réseau de transport ferroviaire régional multimodal; *Orgₛ* est le nombre de passagers en provenance de la s-ième station, atteignables par unité de temps lorsque la s-ième station est limitée par la capacité de la ligne dans le réseau de transport ferroviaire régional multimodal; *Trsₛ* est le nombre de passagers en correspondance à la s-ième station, atteignables par unité de temps lorsque la s-ième station est limitée par la capacité de la ligne dans le réseau de transport ferroviaire régional multimodal; *βᵢ* est un coefficient d'influence sur la capacité d'une ligne de transport ferroviaire régional, résultant de l'exploitation des trains interlignes, de la coordination de la planification, de la facilité des correspondances et de la garantie de sécurité globale; *α*est un coefficient d'utilisation moyen de la capacité d'accueil des passagers de la caisse du véhicule du système de transport ferroviaire régional; *Nᵢ* est la capacité de passage de la ligne *i* ; et *qᵢ* est la capacité maximale de passagers d'un train unique sur la ligne *i* ; et
le taux d'augmentation d'indicateur *Ines(C*_*network)* est calculé comme suit: $Incs \left(C_network\right) = \frac{C _ network 1 - C _ network 0}{C _ network 0} \times 100 %$
*oùC_network0* et *C*_*network 1* sont la capacité de transport totale du réseau routier régional, respectivement avant et après la mise en œuvre du schéma de décision.

5. Procédé selon la revendication 1, où les indicateurs importants comprennent en outre un indicateur 5 et/ou un indicateur 6, l'indicateur 5 étant le temps de parcours multimodal des passagers et l'indicateur 6 étant le taux de ponctualité du transport ferroviaire régional,
où l'analyse et l'évaluation du temps de parcours multimodal des passagers comprennent: le calcul du temps de parcours multimodal des passagers *T_travel_c* et d'un taux de diminution d'indicateur *Decs(T_travel_c),* où le temps de parcours multimodal des passagers *T_travel_c* est calculé comme suit: $T _ travel _ c = \frac{{\sum }_{o = 1}^{S} {\sum }_{d = 1}^{S} ν _ {c}_{od} \times T _ travel _ {c}_{od}}{{\sum }_{o = 1}^{S} {\sum }_{d = 1}^{S} ν _ {c}_{od}}$ $T _ travel _ {c}_{od} = \frac{1}{ν _ {c}_{od}} {\sum }_{q = 1}^{ν _ {c}_{od}} \left(t_out_{c}_{od , q}-tp_in_{c}_{od , q}\right)$
oùS est le nombre total de stations d'un réseau de transport ferroviaire régional; *v*_*c_{od}* est le volume total de déplacements multimodaux ayant pour origine la station o et pour destination la station d; *t_out_c_{od, q}* est le moment où la q-ième personne, dont l'origine est la station o et la destination la station d, arrive à la station de destination en mode multimodal; et *tp*_*in*_*c_{od, q}* est le moment où la q-ième personne, dont l'origine est la station o et la destination la station d, pénètre dans la station d'origine en mode multimodal ; et
le taux de diminution d'indicateur *Decs(T_travel_c)* est calculé comme suit: $Decs \left(T_travel_c\right) = \frac{T _ travel _ c 0 - T _ travel _ c 1}{T _ travel _ c 0} \times 100 %$
où*T*_*travel*_*c0* et *T*_*travel*_*c1* sont des valeurs d'évaluation du temps de parcours multimodal des passagers, respectivement avant et après la mise en œuvre du schéma de décision ; et
l'analyse et l'évaluation du taux de ponctualité du transport ferroviaire régional comprennent : le calcul du taux de ponctualité du transport ferroviaire régional, où le taux de ponctualité*R_punctuality_arrv* du transport ferroviaire régional est calculé comme suit: $R _ punctuality _ arrv = \frac{{\sum }_{l = 1}^{L} {\sum }_{k = 1}^{{K}_{l}} δ \left(\left|tt_{arrv}_{lk}-tt_arrv_{s}_{lk}\right|,ε_{arrv}_{l}\right)}{{\sum }_{l = 1}^{L} {K}_{l}} \times 100 %$ $δ \left(x, ε\right) = \left\{\begin{matrix}1 & 0 \leq x \leq ε \\ 0 & x > ε\end{matrix}\right.$
où *L* est le nombre de lignes d'exploitation du réseau de transport ferroviaire régional multimodal; *Kₗ* est le nombre de trains circulant sur la l-ième ligne d'exploitation du système de transport ferroviaire régional au cours d'une période d'étude, les trains interlignes étant affectés à la ligne d'exploitation sur laquelle ils terminent leur parcours; *tt_arrvₗₖ* est le moment d'arrivée réel du k-ième train circulant sur la l-ième ligne d'exploitation; *tt_arrv_sₗₖ* est le moment d'arrivée prévu du k-ième train circulant sur la l-ième ligne d'exploitation; et *ε_arrvₗ* est l'erreur admissible pour l'arrivée à l'heure des trains sur la l-ième ligne d'exploitation du système de transport ferroviaire régional.

6. Système de simulation analogique pour le transport ferroviaire multimodal à services multiples, conçu pour mettre en œuvre le procédé selon l'une quelconque des revendications 1 à 5, où le système de simulation analogique comprend
un module d'évaluation statistique des indicateurs techniques, le module d'évaluation statistique des indicateurs techniques étant conçu pour évaluer les indicateurs d'exploitation d'un système de transport ferroviaire régional sur la base des informations de changement d'état et des données regroupées du système de transport ferroviaire régional,
une interface d'acquisition et de surveillance de données, une base de données multimodale multiservices,
un module de décision,
une interface de commande de mise en œuvre du schéma de décision et
un noyau de simulation du système de transport ferroviaire multimodal, où
l'interface d'acquisition et de surveillance de données est destinée à acquérir les données d'exploitation et à regrouper les données d'exploitation acquises;
la base de données multimodale multiservices est destinée à soutenir la génération du schéma de décision sur la base des données regroupées;
le module de décision est destiné à générer le schéma de décision;
le noyau de simulation du système de transport ferroviaire multimodal est destiné à mettre en œuvre le schéma de décision ; plus précisément, le noyau de simulation du système de transport ferroviaire multimodal est destiné à influencer les états et comportements du flux de véhicules, les états et comportements du flux de passagers, ainsi que les états et comportements fonctionnels des installations du système de transport ferroviaire régional, pour achever ainsi la mise en œuvre du schéma de décision ; et
l'interface de commande de mise en œuvre du schéma de décision est destinée à recevoir le schéma de décision généré par le module de décision et à convertir ce schéma de décision en ordres de commande de réponse destinés à être transmis au noyau de simulation du système de transport ferroviaire multimodal.

7. Système de simulation analogique pour le transport ferroviaire multimodal à services multiples selon la revendication 6, comprenant en outre un moteur de simulation et un module d'affichage tridimensionnel, où
le moteur de simulation constitue le support sous-jacent de l'ensemble de l'environnement d'exploitation du système de simulation et comprend un module de commande d'exploitation du système de simulation, un module d'interaction d'interface et des données de base,
le module de commande d'exploitation du système de simulation étant destiné à l'ordonnancement des ressources, à la gestion des communications, au contrôle du rythme et au lancement des scènes;
le module d'interaction d'interface est destiné à l'utilisation par un utilisateur de simulation ; le module d'interaction d'interface étant destiné à réaliser des réglages de paramètres, des saisies d'événements et des éditions du système ; et
les données de base étant destinées à constituer les données sous-jacentes du système de simulation, les données de base comprenant des données de modèle tridimensionnel du réseau composite, des données de topologie du réseau composite, des données d'attributs des installations, des données de scènes d'évaluation et d'analyse ainsi que des données macroscopiques de demande de flux de passagers en temps réel ; et
le module d'affichage tridimensionnel utilise l'état et le comportement en temps réel de chaque objet de simulation au sein du noyau de simulation du système de transport ferroviaire multimodal comme référence pour afficher l'état d'exploitation de l'ensemble du système de transport ferroviaire régional.
